# EUROPÄISCHE PATENTSCHRIFT

(11) **EP 0 665 932 B1**
(45) Veröffentlichungstag und Bekanntmachung des Hinweises auf die Patenterteilung: **18.06.1997**
(21) Anmeldenummer: 93923525.5
(22) Anmeldetag: 22.10.1993
(51) Int. Cl.: F16H 63/34

(54) **SCHALTVORRICHTUNG FÜR EIN GETRIEBE, INSBESONDERE EIN SCHALTGETRIEBE EINES KRAFTFAHRZEUGES**
GEAR CHANGING DEVICE FOR A GEAR BOX, IN PARTICULAR A MOTOR VEHICLE GEAR BOX
DISPOSITIF DE CHANGEMENT DE VITESSE, EN PARTICULIER POUR LA BOITE DE VITESSES D'UN VEHICULE AUTOMOBILE

(30) Priorität: 28.10.1992 DE 4236336
(43) Veröffentlichungstag der Anmeldung: 09.08.1995
(73) Patentinhaber: ZF FRIEDRICHSHAFEN Aktiengesellschaft, 88038 Friedrichshafen (DE)
(72) Erfinder: BAILLY, Gerhard, D-88046 Friedrichshafen (DE); BAASCH, Detlef, D-88048 Friedrichshafen (DE); GAZYAKAN, Ünal, D-88045 Friedrichshafen (DE)
(86) Internationale Anmeldenummer: EP9302920
(87) Internationale Veröffentlichungsnummer: WO9410484

(56) Entgegenhaltungen:
- WO-A-93/10377
- DE-A- 2 750 275
- GB-A- 461 850

## Beschreibung

Die Erfindung bezieht sich auf eine Schaltvorrichtung für ein Getriebe, insbesondere ein Zahnräderwechselgetriebe eines Kraftfahrzeuges.

Bei Schaltvorgängen mehrstufiger bzw. mehrgruppiger Zahnräderwechselgetriebe, z. B. Vorgelegegetriebe, darf es nicht dazu kommen, daß zwei Getriebestufen einer Getriebegruppe gleichzeitig eingelegt werden. Eine derartige Fehlbetätigung hätte zur Folge, daß ein formschlüssiges Blockieren der Getriebegruppe und damit ein Blockieren des gesamten Antriebsstranges des Kraftfahrzeuges oder auch ein Zerstören des Getriebes einträte. Die hiermit verbundenen Auswirkungen auf das Fahrzeug und seine Umgebung wären schwer zu kontrollieren und könnten schwerwiegend sein.

In der älteren Patentanmeldung gemäß WO-A 93/10377 (EP-A 611 425), veröffentlicht am 27. Mai 1993, der Anmelderin ist eine Schaltvorrichtung dargestellt und beschrieben, bei der die Schaltelemente (z. B. Klauenringe) des Zahnräderwechselgetriebes über Schubkurbelgetriebe in ihre Schaltstellungen überführt werden. Die Schubkurbelgetriebe sind hierbei aus Schaltschwingen und einer Schubstange gebildet. Die Schaltschwingen werden über Koppelmechanismen in Abhängigkeit des zu schaltenden Ganges mit der Schubstange verbunden bzw. es wird eine ortsfeste Arretierung einer Schaltschwinge mit einem gehäusefesten Teil hergestellt.

Der vorliegenden Erfindung liegt die Aufgabe zugrunde, die Schalteinrichtung nach dem älteren Vorschlag derart zu verbessern, daß die eingangs beschriebenen, nachteiligen Folgen einer möglichen Fehlbedienung sicher ausgeschlossen sind.

Diese Aufgabe wird erfindungsgemäß durch die Merkmale des Anspruchs 1 gelöst.

Durch die ungleich großen Abstände der Koppelmechanismen in der Ruhestellung und der Mitnahmestellung wird eine geometrisch-mechanisch wirkende Sicherung bereitgestellt, die bei einer möglichen Fehlbedienung ein Blockieren einer Getriebegruppe sicher verhindert. Es ist kein gleichzeitiges Einlegen mehrerer Gänge möglich.

Bei möglichen Ausgestaltungen der Schaltvorrichtung weist die Schubstange Mitnahmeöffnungen auf, deren gegenseitiger Abstand kleiner oder größer als der Abstand der zugehörigen Koppelmechanismen in ihrer Ruhestellung ist. Je nachdem, ob der Abstand kleiner oder größer ist, ergibt sich ein negativer oder positiver Versatz. Im Falle eines negativen Versatzes verlängert sich der Stellweg der Schubstange, weil eine Überschneidung der Schaltwege eintritt. Wird hingegen ein positiver Versatz gewählt, verkürzen sich die Schaltzeiten zwischen benachbarten Schaltpaketen. Der Fachmann wird, je nach dem Getriebetyp, im Einzelfall den geeigneten Versatz festlegen.

Bei einem bevorzugten Ausführungsbeispiel ist zumindest eine der Mitnahmeöffnungen gegenüber der Ruhestellung des ihr zugeordneten Koppelmechanismus versetzt. Der Versatz dieser Mitnahmeöffnung kann derart erfolgen, daß die Koppelmechanismen bei einem Wähl- bzw. Schaltvorgang zeitlich getrennt die Mitnahmeöffnungen in der Schubstange verlassen bzw. in diese einspuren. Damit ergibt sich durch den Versatz zumindest einer Mitnahmeöffnung zusätzlich die Möglichkeit, die Schaltzeiten zwischen benachbarten Schaltpaketen zu verkürzen, da sich der Schaltweg verringert. Alternativ hierzu läßt sich die Stellgeschwindigkeit der Schubstange beim Übergang von einem zum benachbarten Schaltpaket verringern. Der Wählvorgang wird damit sicherer, ohne daß bei einem Schaltpaketwechsel die

Schaltzeit verlängert werden muß.

Nachfolgend wird ein Ausführungsbeispiel der Erfindung anhand der Zeichnungen näher erläutert:
Es zeigen:
- Fig. 1: einen schematischen Querschnitt durch eine Schaltvorrichtung mit zwei Schaltschwingen, wobei sich eine der Schaltschwingen in angekoppeltem Zustand befindet und
- Fig. 2: den schematischen Querschnitt nach Fig. 1 im Falle einer Fehlbedienung.

Zu Beginn sei ergänzend auf die Figurenbeschreibung der eingangs erwähnten älteren Patentanmeldung der Anmelderin verwiesen. Die dort gemachten Ausführungen dienen, sofern zweckmäßig, der zusätzlichen Erläuterung bzw. Ergänzung hinsichtlich des Aufbaus und der Wirkungsweise der erfindungsgemäßen Schaltvorrichtung.

Die Schaltvorrichtung weist eine Schubstange 1 auf, die z. B. aus Flachstahl-Material hergestellt ist. Die Schubstange 1 ist in Längsrichtung (die Zeichnung zeigt einen Längsschnitt durch die Schubstange 1) in verschiedene Schaltstellungen durch Bewegungen nach links bzw. nach rechts überführbar. Die Schubstange 1 ist hierzu verschiebbar an einem gehäusefesten Teil 3, z. B. der Gehäusewand des Getriebes, befestigt.

Beim erläuterten Ausführungsbeispiel werden vier - auf zwei Schaltpakete aufgeteilte - Gänge geschaltet, die durch die römischen Ziffern I, II und III, IV markiert sind. Hierzu sind geeignete Schaltelemente (selbst nicht dargestellt) vorgesehen, die über Schubkurbelgetriebe 4 aus einer ortsfesten Ruhestellung in ihre jeweilige Schaltstellung überführt werden. Im vorliegenden Fall werden die Schubkurbelgetriebe 4 aus Schaltschwingen 5 und der Schubstange 1 gebildet.

Jede der Schaltschwingen 5 ist an ihrem oberen, der Schubstange 1 zugewandten Ende mit einem Koppelmechanismus 6 versehen. Jeder Koppelmechanismus 6 besteht aus einem federbelasteten Bolzen 7, der axial beweglich in der Schaltschwinge 5 gelagert ist und mit seinem freien Ende formschlüssig, entweder in das gehäusefeste Teil 3 oder in die Schubstange 1, eingreift.

Geeignete Betätigungseinrichtungen, beispielsweise Elektromagnete, sorgen dafür, daß die Bolzen 7 entweder in gehäusefeste Öffnungen 8 oder in Mitnahmeöffnungen 9 der Schubstange 1 einrasten.

Vorzugsweise sind die freien Enden der Bolzen 7 - T-förmig vorgesehen in Längsrichtung der Schubstange 1 - ausgebildet. Mit ihrem Quersteg 2 rasten sie entweder in die gehäusefesten Öffnungen 8 oder in einen Querschlitz 10 der Mitnahmeöffnungen 9 der Schubstange 1 ein. Die Mitnahmeöffnungen 9 der Schubstange 1 sind demzufolge - gesehen in Draufsicht - kreuzförmig ausgebildet.

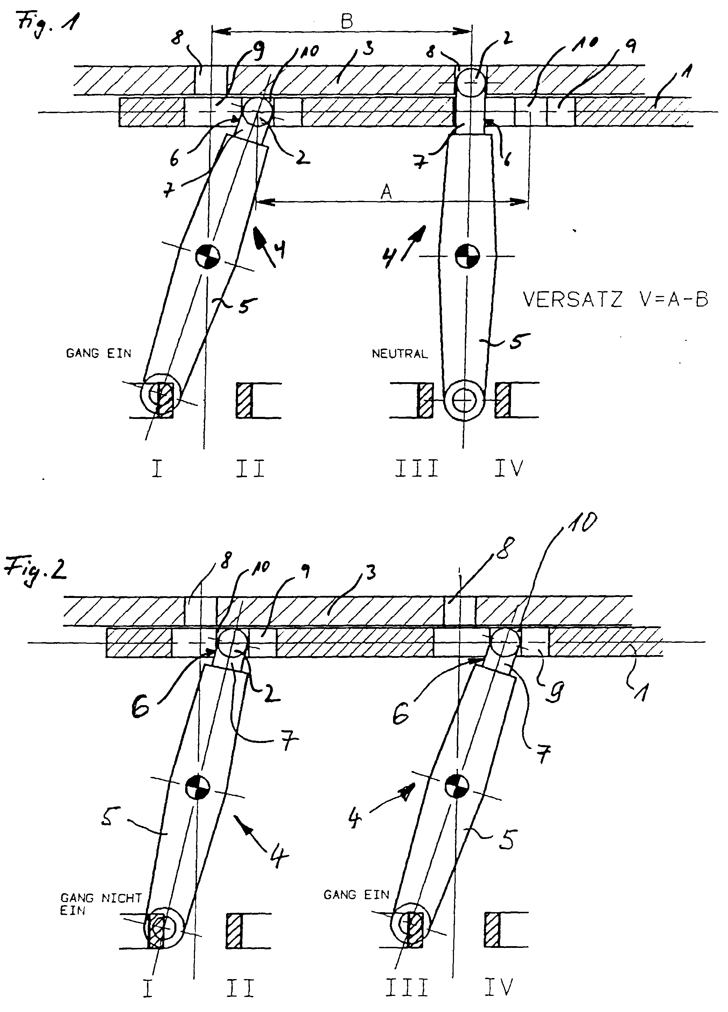

In der Abbildung entsprechend Fig. 1 befindet sich die linke Schaltschwinge 5 in ihrer angekoppelten Position mit der Schubstange 1. Der Bolzen 7 des Koppelmechanismus 6 taucht mit seinem Quersteg 2 in den entsprechenden Querschlitz 10 der in der Zeichnung links liegenden Mitnahmeöffnung 9 der Schubstange 1 ein. Die Schaltschwinge 5 hat das Schaltelement in seine dem Gang I entsprechende Schaltstellung überführt. Die rechts liegende Schaltschwinge 5 ist über ihren Koppelmechanismus 6 ortsfest verrastet. Hierzu greift der Bolzen 7 federbelastet über seinen Quersteg 2 in die gehäusesfeste Öffnung 8 ein. Der Bolzen 7 durchgreift ferner den in Längsrichtung verlaufenden Teil der kreuzförmigen Mitnahmeöffnung 9 in der Schubstange 1. Hierdurch wird die Axialbewegung der Schubstange 1 nicht behindert, wenn die links liegende Schaltschwinge 5 in bzw. aus ihrer Schaltstellung gebracht bzw. herausgeführt wird.

Aus den Positionen der Schaltschwingen 5 nach Fig. 1 ist zusammenfassend ersichtlich, daß die linke Schaltschwinge 5 den Gang I schaltet, während die rechte Schaltschwinge 5 eine Neutralstellung zwischen den Gangstellungen III und IV einnimmt. Aus der Abbildung ist ferner ersichtlich, daß der Querschlitz 10 der (rechten) Mitnahmeöffnung 9 in bezug auf die gehäusefeste Öffnung 8 seitlich versetzt ist.

Der Abstand der benachbarten gehäusefesten Öffnungen 8 ist in der Zeichnung mit "B" angegeben. Die Querschlitze 10 der Mitnahmeöffnungen 9 nehmen einen gegenseitigen Abstand von "A" ein. Wesentlich ist, daß die Abstände "B" und "A" voneinander abweichen. Hierdurch stellt sich ein Versatz "V" ein, der sich aus der Differenz der Abstände "A" minus "B" ergibt.

In Fig. 2 sind die Schaltschwingen 5 in einer Stellung eingezeichnet, in der ihre Schaltelemente gleichsinnig verschwenkt wurden. Es liegt also der Fall einer Fehlbetätigung vor. Beide Schaltschwingen 5 sind über die Koppelmechanismen 6 mit der Schubstange 1 verbunden. Da der Abstand der benachbarten, gehäusefesten Öffnungen 8, der mit "B" eingezeichnet ist, nicht dem Abstand der Koppelmechanismen 6 der Schaltschwingen 5 übereinstimmt, erfolgt eine ungleich große Verschwenkung beider Schaltschwingen 5. Es liegt eine geometrisch-mechanische Sicherung vor, die dafür sorgt, daß lediglich ein Gang eines Schaltpaketes geschaltet wird, während der jeweils andere Gang des zweiten Schaltpaketes ungeschaltet bleibt. Im vorliegenden Fall ist der Gang III geschaltet, während der Gang I ungeschaltet bleibt.

Im umgekehrten Fall gilt sinngemäß das gleiche, so daß, wenn beispielsweise der Gang II geschaltet ist, der Gang IV ungeschaltet bleibt. Die mechanisch-geometrisch wirkende Absicherung im Falle einer Fehlbetätigung ist auf den Versatz "V" bzw. die ungleichen Abstände "B" und "A" zurückzuführen.

Der Versatz "V" bewirkt ferner, daß die Koppelmechanismen 6 bei einem Wähl- bzw. Schaltvorgang benachbarter Gänge zeitlich getrennt die Mitnahmeöffnungen 9 der Schubstange 1 verlassen bzw. in diese einspuren. Im Fall des negativen Versatzes (A = kleiner) verlängert sich der Stellweg der Schubstange 1 bei Schaltvorgängen zwischen benachbarten Schaltpaketen, während er sich im Fall des positiven Versatzes (A = größer) verringert. Damit ergibt sich zusätzlich die Möglichkeit, die Schaltzeiten zwischen benachbarten Schaltpaketen zu verkürzen (wegen des kleineren Stellweges). Alternativ hierzu läßt sich die Stellgeschwindigkeit der Schubstange 1 beim Übergang von einem auf das andere Schaltpaket verringern. Der Wählvorgang erfolgt damit sehr sicher, ohne daß die Schaltzeit verlängert werden muß.

## Patentansprüche

1. Schalteinrichtung für die Schaltungsbetätigung von Mehrstufenschaltgetrieben, insbesondere ein Schaltgetriebe eines Kraftfahrzeugs,
a) mit mehreren um einen gehäusefesten Drehpunkt verschwenkbaren Schaltschwingen (5), die je einer Schaltmuffe zugeordnet sind;
b) wobei der oberhalb des Drehpunktes befindliche Schaltschwingenarm der Schaltschwingen über mindestens ein im wesentlichen zur Getrieberäderachse parallel wirksames Schaltelement in Gangschaltstellungen verschoben wird;
c) wobei das mindestens eine Schaltelement aus einer einzigen parallel zur Getrieberäderachse in Neutral- und Gangschaltstellungen verschiebbaren Schubstange (1) und mehreren, jeweils den Schaltschwingen zugeordneten und einzeln betätigbaren Koppelmechanismen (6) besteht;
d) wobei ein Koppelmechanismus (6) in unbetätigtem Zustand jeweils eine Schaltschwinge (5) an einem gehäusefesten Teil (3) in ortsfester Ruhestellung hält und gleichzeitig die Verschiebung der Schubstange (1) freigibt;
e) wobei ein Koppelmechanismus (6) in betätigtem Zustand unter Einwirkung einer Koppelkraft eine triebliche Mitnahmestellung zwischen der Schubstange und einer Schaltschwinge (5) herstellt und gleichzeitig die Verbindung dieser Schaltschwinge (5) mit dem gehäusefesten Teil (3) löst, und
f) wobei der Abstand (B) gehäusefester Öffnungen (8) zur Aufnahme der Koppelmechanismen (6) in der Ruhestellung ungleich dem Abstand (A) von Mitnahmeöffnungen (9) in der Schubstange (1) zur Aufnahme der Koppelmechanismen (6) in der Mitnahmestellung ist.

2. Schaltvorrichtung nach Anspruch 1, dadurch **gekennzeichnet**, daß zumindest eine der Mitnahmeöffnungen gegenüber der Ruhestellung des ihr zugeordneten Koppelmechanismus (6) versetzt ist.

3. Schaltvorrichtung nach Anspruch 1, dadurch **gekennzeichnet**, daß für den Fall der gleichzeitigen Mitnahme zweier Schaltschwingen (5) die Schaltelemente mit einem Wegversatz bewegt werden.

4. Schaltvorrichtung nach Anspruch 3, dadurch **gekennzeichnet**, daß für den Fall der gleichzeitigen Mitnahme zweier Schaltschwingen (5) durch die Schubstange (1) ein Gang eines Schaltpaketes geschaltet wird, während der gleichsinnig zu schaltende Gang eines weiteren Schaltpaketes ungeschaltet bleibt.

5. Schaltvorrichtung nach Anspruch 2, dadurch **gekennzeichnet**, daß der Versatz (V) der Mitnahmeöffnungen derart ist, daß die Koppelmechanismen (6) bei einem Schaltvorgang die Mitnahmeöffnungen zeitlich getrennt verlassen bzw. in diese einspuren.

6. Schaltvorrichtung nach Anspruch 1, dadurch **gekennzeichnet**, daß die Stellgeschwindigkeit der Schubstange (1) variabel ist.

## Claims

1. Gear changing device for actuating gear changing of multistage gear boxes, in particular a gear box of a motor vehicle,
a) with several oscillating cranks (5) swivellable about a point of rotation fixed in the casing, each oscillating crank being assigned to a gear shift sleeve;
b) in which the oscillating crank arm of the oscillating cranks which is situated above the point of rotation is displaced into gear shift positions via at least one gear shift element acting essentially in parallel to the gear wheel axis;
c) in which at least the one gear shift element consists of a single slide rod (1) displaceable in parallel to the gear wheel axis into neutral and gear shift positions and of several coupling mechanisms (6) assigned respectively to the oscillating cranks and individually actuatable;
d) in which a coupling mechanism (6) which has not been actuated holds an oscillating crank (5) in each case in a stationary rest position on a part (3) fixed in the casing and at the same time allows the displacement of the slide rod (1);
e) in which a coupling mechanism (6) which has been actuated establishes a transmissive driving position between the slide rod and an oscillating crank (5) under the influence of a coupling force and at the same time disconnects this oscillating crank (5) from the part (3) fixed in the casing, and
f) in which the distance (B) of openings (8) fixed in the casing for holding the coupling mechanisms (6) in the rest position differs from the distance (A) of driving openings (9) in the slide rod (1) for holding the coupling mechanisms (6) in the driving position.

2. Gear changing device according to claim 1,
characterized in that at least one of the driving openings is offset in relation to the rest position of the coupling mechanism (6) assigned to it.

3. Gear changing device according to claim 1,
characterized in that, in the event of two oscillating cranks (5) being driven at the same time, the gear shift elements are moved with a path offset.

4. Gear changing device according to claim 3,
characterized in that, in the event of two oscillating cranks (5) being driven at the same time by the slide rod (1), one gear of a gear shift set is engaged while the gear of a further gear shift set to be shifted in the same direction remains unengaged.

5. Gear changing device according to claim 2,
characterized in that the offset (V) of the driving openings is such that in a gear shifting operation the coupling mechanisms (6) leave the driving openings or engage in these at a separate point in time.

6. Gear changing device according to claim 1,
characterized in that the positioning speed of the slide rod (1) is variable.

## Revendications

1. Dispositif de commande d'une boîte de vitesses à plusieurs rapports, notamment d'une boîte de vitesses d'un véhicule automobile,
a) ayant plusieurs biellettes de commande (5) pivotant autour d'un point de pivotement fixe par rapport au boîtier, et associées chacune à une douille de commande;
b) dans lequel le bras des biellettes disposé au-dessus du point de pivotement est déplacé dans la position d'engagement des vitesses par l'intermédiaire d'au moins un élément de commande agissant sensiblement parallèlement à l'axe des pignons de la boîte;
c) dans lequel ledit au moins un élément de commande se compose d'une tringle unique (1),coulissant, parallèlement à l'axe des pignons dans sa position neutre et dans sa position d'engagement des vitesses, ainsi que de plusieurs mécanismes de couplage (6) respectivement associés aux biellettes de commande, et activés individuellement;
d) dans lequel un mécanisme de couplage (6) en position inactive maintient une biellette de commande (5) contre une pièce fixe (3) du boîtier et libère simultanément le coulissement de la tringle coulissante;
e) dans lequel un mécanisme de couplage (6) en position activée génère un entraînement actif sous l'effet d'une force de couplage, entre la tringle coulissante et une biellette de commande (5) et libère simultanément la liaison de cette biellette de commande (5) et de la partie fixe du boîtier (3), et
f) dans lequel la distance (B) entre des ouvertures (8) ménagées dans le boîtier pour recevoir les mécanismes de couplage (6) dans leur position de repos, est différente de la distance (A) des ouvertures d'entraînement (9) de la tringle coulissante (1) pour recevoir les mécanismes de couplage (6) dans la position active.

2. Dispositif de commande selon la revendication 1, **caractérisé** en ce que au moins une des ouvertures d'entraînement est décalée par rapport à la position de repos du mécanisme de couplage (6) correspondant.

3. Dispositif de commande selon la revendication 1, **caractérisé** en ce que dans le cas de l'entraînement simultané de deux biellettes de commande (5) les éléments de commande sont déplacés sur des trajectoires décalées.

4. Dispositif de commande selon la revendication 3, **caractérisé** en ce que dans le cas d'un entraînement simultané de deux biellettes de commande (5) par la tringle coulissante, un rapport de vitesse d'un groupe de vitesses est engagé pendant que le rapport équivalent d'un autre groupe de vitesses reste inengagé.

5. Dispositif de commande selon la revendication 2, **caractérisé** en ce que le décalage (V) des ouvertures entraînement est tel que les mécanismes de commande (6) quittent ces ouvertures de façon décalée dans le temps, respectivement s'y engagent lors d'un processus d'engagement des vitesses.

6. Dispositif de commande selon la revendication 1, **caractérisé** en ce que la vitesse de déplacement de la tringle coulissante (1) est variable.
